# EUROPEAN PATENT SPECIFICATION

(11) **EP 3 509 395 B1**
(45) Date of publication and mention of the grant of the patent: **17.06.2020**
(21) Application number: 17845756.0
(22) Date of filing: 11.04.2017
(51) Int. Cl.: H05B 6/12, F24C 15/00

(54) **INDUCTION-HEATING COOKER**
INDUKTIONSERWÄRMUNGSHERD
CUISEUR À CHAUFFAGE PAR INDUCTION

(30) Priority: 30.08.2016 JP 2016168396
(43) Date of publication of application: 10.07.2019
(73) Proprietor: Panasonic Intellectual Property Management Co., Ltd., Osaka-shi, Osaka 540-6207 (JP)
(72) Inventor: TAKEBE, Masaya, Osaka-shi, Osaka 540-6207 (JP); KUROSE, Yoichi, Osaka-shi, Osaka 540-6207 (JP); KINOSHITA, Masashi, Osaka-shi, Osaka 540-6207 (JP)
(74) Representative: SSM Sandmair
(86) International application number: PCT/JP2017/014821
(87) International publication number: WO 2018/042745

(56) References cited:
- EP-A1- 2 252 130
- EP-A1- 3 010 308
- EP-A2- 2 670 211
- EP-A2- 2 775 783
- WO-A1-2014/064922
- WO-A1-2014/064941
- JP-A- 2013 054 951
- US-A1- 2015 068 408

## Description

### TECHNICAL FIELD

The present disclosure relates to an induction heating cooker as per the preamble of claim 1, which can inductively heat an object to be heated placed on a top plate, such as a metal cooking pot, by a plurality of heating coils.

### BACKGROUND ART

Conventionally, an induction heating cooker that inductively heats one object to be heated by one heating coil has generally been known.

On the other hand, there has been proposed an induction heating cooker having a multi-coil structure in which one object to be heated can be inductively heated by a plurality of heating coils disposed below a top plate on which the object to be heated is to be placed. According to the induction heating cooker described above, whatever size the object to be heated has or wherever the object to be heated is placed on the top plate, the object to be heated can be inductively heated by driving a heating coil corresponding to a size and a placement position of the object to be heated.

An induction heating cooker disclosed in Patent Literature 1 is one example of induction heating cookers with a multi-coil structure. The induction heating cooker disclosed in Patent Literature 1 includes a plurality of heating coils, a cookware detector that determines whether cookware is placed above the heating coils, and an operation unit.

The determination result of the cookware detector is displayed as an icon in a placement condition display area of an operation display unit. When a user selects this icon, an operation screen for heating the cookware corresponding to the icon is displayed in an operation area of the operation display unit. When this operation screen is selected, heating coils are driven to heat the cookware corresponding to the icon.

However, the conventional induction heating cooker as disclosed in Patent Literature 1 has still room for improvement in usability.

### Citation List

### Patent Literature

PTL 1: Unexamined Japanese Patent Publication No. 2014-44852

EP 2 670 211 A2 discloses an induction heating cooker according to the initially-mentioned type.

### SUMMARY OF THE INVENTION

The present disclosure provides an induction heating cooker that can further improve usability.

The present invention provides an induction heating cooker according to claim 1. Further embodiments of the present invention are described in the dependent claims.

### BRIEF DESCRIPTION OF DRAWINGS

FIG. 1 is an exploded perspective view illustrating an induction heating cooker according to an exemplary embodiment of the present disclosure.
FIG. 2 is a block diagram of the induction heating cooker according to the exemplary embodiment of the present disclosure.
FIG. 3 is a plan view illustrating the induction heating cooker, according to the exemplary embodiment of the present disclosure, from which a top plate is removed.
FIG. 4 is a view illustrating, in a broken line, a placement area when an object to be heated is placed at a rear left part of the top plate in FIG. 3.
FIG. 5 is a view illustrating one example of area identification information displayed on an operation display unit when a placement area detected by an object-to-be-heated detector is the area indicated by a broken line in FIG. 4.
FIG. 6 is a view illustrating a state where an "Assist menu" is displayed on the operation display unit as a heating menu set in advance in correspondence with a low temperature sensor.
FIG. 7 is a view illustrating, in a broken line, a placement area when an object to be heated is placed at a rear right part of the top plate in FIG. 3.
FIG. 8 is a view illustrating one example of area identification information displayed on the operation display unit when a placement area detected by the object-to-be-heated detector is the area indicated by a broken line in FIG. 7.
FIG. 9 is a view illustrating a state where an "Assist menu" is displayed on the operation display unit as a heating menu set in advance in correspondence with a high temperature sensor.
FIG. 10 is a view illustrating a display example in which sensor identification information is added to the area identification information displayed on the operation display unit.
FIG. 11 is a flowchart illustrating an operation of a heating controller.

### DESCRIPTION OF EMBODIMENT

### (Findings which are a basis of the present disclosure)

The present inventors have made earnest studies for further improving usability of induction heating cookers, and as a consequence, have obtained the following findings.

A conventional induction heating cooker is provided with a temperature sensor that detects a temperature of an object to be heated, and controls an operation of a heating coil such that the object to be heated has a desired temperature, based on a temperature detected by the temperature sensor.

The present inventors have found that, by being provided with a plurality of temperature sensors, an induction heating cooker with a multi-coil structure can detect a temperature of an object to be heated, wherever the object to be heated is placed on a top plate, and thus, usability of the induction heating cooker can be further improved.

However, it is virtually difficult, from the viewpoint of cost, to use a high-performance temperature sensor with a wide detectable temperature range for all temperature sensors.

In view of this, the present inventors have conceived, as a result of their earnest studies, a configuration in which a plurality of temperature sensors having different detectable temperature ranges from one another are used, and different information is displayed on an operation display unit according to a temperature sensor located below an object to be heated.

With this configuration, even when a plurality of temperature sensors having different detectable temperature ranges from one another are used, a user can recognize what kind of temperature sensors is located below an object to be heated by checking the display on the operation display unit.

Thus, wherever the object to be heated is placed on the top plate, it is possible for the induction heating cooker to recognize the temperature sensor located below the object to be heated and execute a heating menu corresponding to this temperature sensor. Accordingly, the usability of the induction heating cooker can be further improved.

The present inventors have decided to provide the following disclosure based on these novel findings.

An induction heating cooker according to a first aspect of the present disclosure includes: a top plate on which an object to be heated is placed; a plurality of heating coils that are disposed below the top plate and inductively heat the object to be heated; a plurality of temperature sensors disposed below the top plate and having different characteristics from one another; an object-to-be-heated detector that detects a placement area where the object to be heated is placed; a heating controller that controls an operating state of at least one of the plurality of heating coils corresponding to the placement area detected by the object-to-be-heated detector based on a temperature detected by at least one of the plurality of temperature sensors; an operation unit operated by a user; and a display unit, wherein the heating controller is configured to recognize a temperature sensor located below the placement area detected by the object-to-be-heated detector from among the plurality of temperature sensors, and display information set in advance for the temperature sensor recognized by the heating controller on the display unit.

According to this configuration, wherever the object to be heated is placed on the top plate, the induction heating cooker recognizes a temperature sensor located below the object to be heated and displays information set in advance for the temperature sensor which is recognized on the display unit, whereby a user can place the object to be heated at an appropriate location and execute a heating operation. Accordingly, the usability of the induction heating cooker can be further improved.

In the induction heating cooker according to a second aspect of the present disclosure, the heating controller may be configured to display sensor identification information indicating a temperature sensor recognized by the heating controller on the display unit, as the information set in advance.

According to this configuration, the user can acquire the information about the temperature sensor located below the object to be heated, and thus, the user can place the object to be heated at an appropriate location and execute a heating operation.

In the induction heating cooker according to a third aspect of the present disclosure, the heating controller may be configured to display a heating menu corresponding to a temperature sensor recognized by the heating controller on the display unit, as the information set in advance.

According to this configuration, the user can refer to the heating menu corresponding to the temperature sensor located below the object to be heated, and thus, the user can place the object to be heated at an appropriate location and execute a heating operation.

In the induction heating cooker according to a fourth aspect of the present disclosure, the heating controller may be configured to display area identification information indicating the placement area on the display unit.

According to this configuration, the placement area is displayed on the display unit, and thus, the user can easily recognize which object to be heated the information set in advance and is displayed on the display unit corresponds to.

In the induction heating cooker according to a fifth aspect of the present disclosure, the operation unit may be configured such that the area identification information is manually changeable.

According to this configuration, when the area identification information which is displayed is inappropriate, the user can correct the area identification information.

In the induction heating cooker according to a sixth aspect of the present disclosure, the heating controller may be configured to display the information set in advance on the display unit, when the placement area indicated by the area identification information is selected.

According to this configuration, the user can refer to the information set in advance when selecting the placement area of the object to be heated, whereby usability is improved.

In the induction heating cooker according to a seventh aspect of the present disclosure, a temperature range detectable by at least one of the plurality of temperature sensors may be different from temperature ranges detectable by other temperature sensors from among the plurality of temperature sensors.

According to this configuration, even if temperature sensors having different detectable temperature ranges from one another are mounted, information set in advance for each temperature sensor is displayed, whereby the user can comfortably perform operation.

In the induction heating cooker according to an eighth aspect of the present disclosure, a lower limit value of a temperature range detectable by at least one of the plurality of temperature sensors may be different from lower limit values of temperature ranges detectable by other temperature sensors from among the plurality of temperature sensors.

According to this configuration, even if temperature sensors having different lower limit values of detectable temperature ranges from one another are mounted, information set in advance for each temperature sensor is displayed, whereby the user can comfortably perform operation.

In the induction heating cooker according to a ninth aspect of the present disclosure, the heating controller may be configured such that, when recognizing that a first temperature sensor and a second temperature sensor which are among the plurality of temperature sensors and have different lower limit values of dectectable temperature ranges from each other are located below the placement area detected by the object-to-be-heated detector, the heating controller recognizes the first temperature sensor or the second temperature sensor as a temperature sensor located below the placement area based on a ratio of a size of an area where a temperature is detectable by the second temperature sensor to a size of an area where a temperature is detectable by the first temperature sensor, and displays on the display unit information set in advance for the one of the first temperature sensor and the second temperature sensor that is selected by the heating controller.

According to this configuration, even if different types of temperature sensors are located below the placement area, the induction heating cooker recognizes one temperature sensor and displays the information set in advance for the temperature sensor on the display unit, whereby the user can comfortably perform operation.

In the induction heating cooker according to a tenth aspect of the present disclosure, the display unit may be configured to display the information set in advance as an icon.

According to this configuration, the user can easily recognize the information set in advance.

In the induction heating cooker according to an eleventh aspect of the present disclosure, the operation unit and the display unit may be integrally formed as a touch panel.

This configuration enables easy operation and easy-to-see display for the user, thereby improving usability.

An exemplary embodiment of the present disclosure will be described below with reference to the drawings. Note that the exemplary embodiment should not be construed as limiting the present disclosure.

In the following description, terms indicating directions such as "upper", "lower", "horizontal", "front", and "rear" are used based on a state in normal use, for the sake of convenience of description. However, these terms do not limit a use state or the like of the induction heating cooker according to the present disclosure.

### (Exemplary embodiment)

### [1. Overall configuration of induction heating cooker]

Firstly, the overall configuration of induction heating cooker 100 according to the present exemplary embodiment will be described.

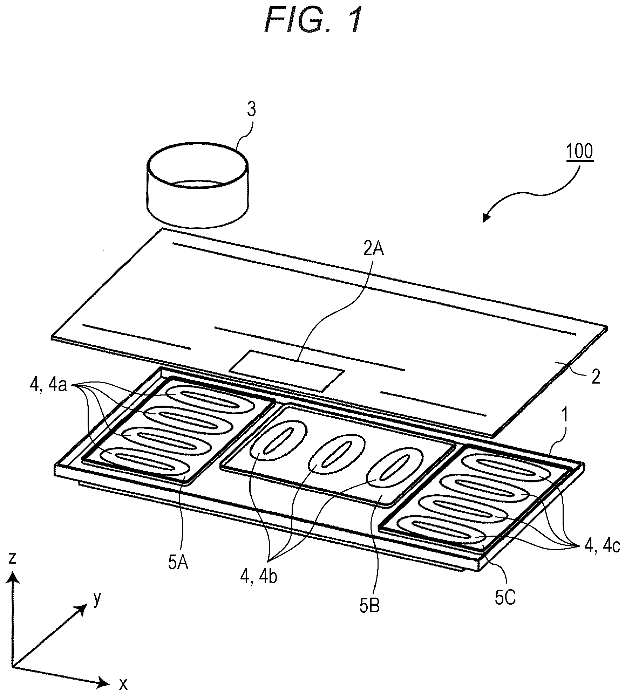

FIG. 1 is an exploded perspective view illustrating an induction heating cooker according to the exemplary embodiment of the present disclosure.

As illustrated in FIG. 1, induction heating cooker 100 according to the present exemplary embodiment includes housing 1 having an opening formed in an upper surface, and top plate 2 covering the opening in the upper surface of housing 1. Housing 1 has a bottom surface part and a side part.

Top plate 2 is a flat plate member made of glass, for example. Object to be heated 3 such as a metal cooking pot, a frying pan, or a kettle is placed on the upper surface of top plate 2. Transparent operation window 2A is provided on the front side and at the middle of the upper surface of top plate 2.

A plurality of heating coils 4 (4a, 4b, 4c) are provided below top plate 2 and inside housing 1 so as to inductively heat a plurality of objects to be heated 3. In the present exemplary embodiment, the plurality of heating coils 4 are mounted to mounting plates 5A to 5C, respectively. Three mounting plates 5A to 5C are provided inside housing 1. Mounting plates 5A to 5C have a rectangular shape.

Mounting plates 5A, 5C are provided inside housing 1 and near left and right side parts of housing 1 with a short direction extending along horizontal direction X and a long direction extending along front-rear direction Y. Four heating coils 4 (4a, 4c) are respectively mounted to mounting plates 5A, 5C. Respective heating coils 4 (4a, 4c) have an elliptical shape with a major axis extending along horizontal direction X and a minor axis extending along front-rear direction Y. Heating coils 4 (4a, 4c) are disposed in parallel with each other in front-rear direction Y. Horizontal direction X, front-rear direction Y, and height direction Z are mutually orthogonal.

Mounting plate 5B is provided between mounting plate 5A and mounting plate 5C and behind operation window 2A with a short direction extending along front-rear direction Y and a long direction extending along horizontal direction X. Three heating coils 4 (4b) are mounted to mounting plate 5B. Respective heating coils 4 (4b) have an elliptical shape with a minor axis extending along horizontal direction X and a major axis extending along front-rear direction Y. Respective heating coils 4 (4b) are disposed in parallel with each other in horizontal direction X.

### [2. Control using temperature sensor]

Next, control of induction heating cooker 100 using a temperature sensor will be described.

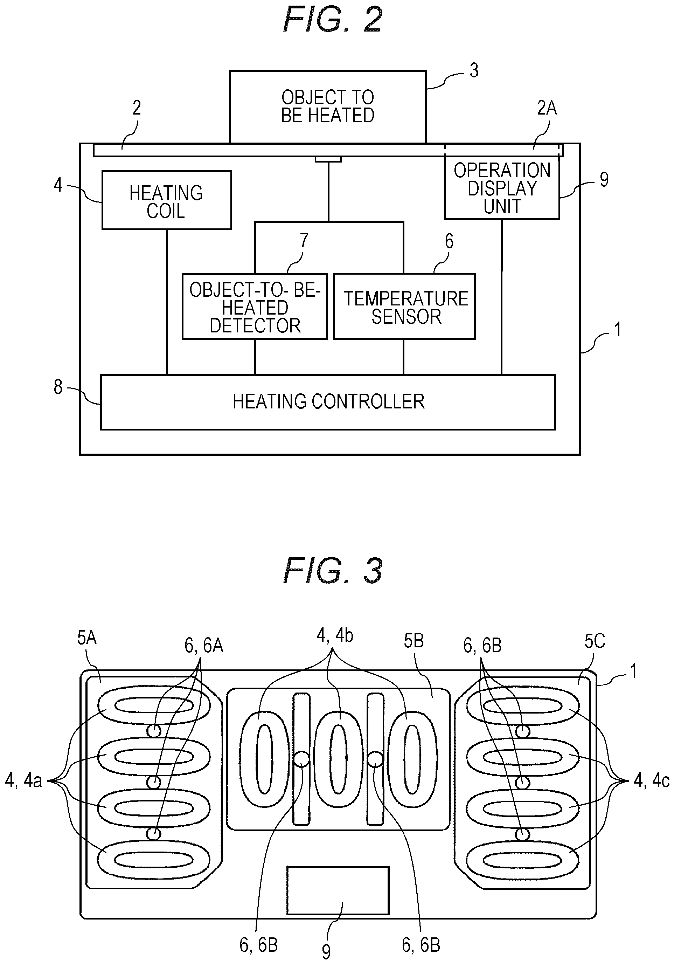

FIG. 2 is a block diagram of the induction heating cooker according to the present exemplary embodiment. FIG. 3 is a plan view illustrating the induction heating cooker, according to the present exemplary embodiment, from which top plate 2 is removed.

As illustrated in FIG. 2, temperature sensor 6, object-to-be-heated detector 7, heating controller 8, and operation display unit 9 are provided inside housing 1. A plurality of temperature sensors 6 are disposed below top plate 2. Operation display unit 9 is disposed below operation window 2A of top plate 2.

As illustrated in FIG. 3, the plurality of temperature sensors 6 include low temperature sensors 6A and high temperature sensors 6B that have different detectable temperature ranges, which are characteristics of the temperature sensors, from each other.

In the present exemplary embodiment, a lower limit value of a detectable temperature range is different between low temperature sensor 6A and high temperature sensor 6B. The detectable temperature range of low temperature sensor 6A is 70°C to 300°C, for example. The detectable temperature range of high temperature sensor 6B is 140°C to 300°C, for example. In other words, low temperature sensor 6A is a temperature sensor having a low lower limit value of the detectable temperature range, and high temperature sensor 6B is a temperature sensor having a lower limit value of the detectable temperature range higher than the lower limit value of the detectable temperature range of low temperature sensor 6A.

Low temperature sensors 6Aare disposed between adjacent heating coils 4a on mounting plate 5A. High temperature sensors 6B are disposed between adjacent heating coils 4b on mounting plate 5B. High temperature sensors 6B are also disposed between adjacent heating coils 4c on mounting plate 5C.

Object-to-be-heated detector 7 (see FIG. 2) is configured to detect a placement area where object to be heated 3 is placed. Object-to-be-heated detector 7 is configured to detect the placement area of object to be heated 3 by detecting, for example, a response from an inverter circuit (not illustrated) included in heating controller 8 (see FIG. 2) when the inverter circuit supplies a high frequency current to heating coils 4.

Object-to-be-heated detector 7 may be configured to include a detection coil and detect a placement area by detecting a change in inductance. Object-to-be-heated detector 7 may also be configured to include an electrode and detect a placement area by detecting a capacitance change caused by the placement of object to be heated 3.

Heating controller 8 (see FIG. 2) controls an operating state of heating coil 4 corresponding to the placement area detected by object-to-be-heated detector 7 based on a temperature detected by temperature sensor 6.

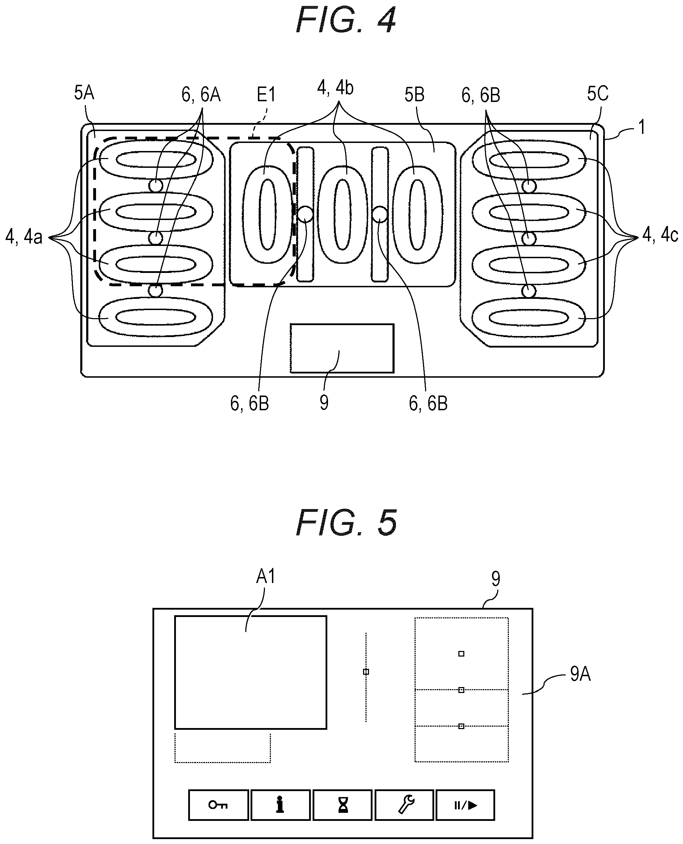

FIG. 4 is a view illustrating, in a broken line, a placement area when an object to be heated is placed at a rear left part of the top plate in FIG. 3.

In a case where the placement area where object to be heated 3 is placed is area E1 enclosed by a broken line in FIG. 4, for example, heating coils 4 corresponding to area E1 are three heating coils 4a on mounting plate 5A and one leftmost heating coil 4b on mounting plate 5B. Heating controller 8 controls the operating states of these four heating coils 4 based on the temperature detected by temperature sensors 6.

Heating controller 8 also recognizes temperature sensors 6 located below the placement area detected by object-to-be-heated detector 7. In addition, heating controller 8 displays information set in advance for temperature sensor 6 which is recognized on operation display unit 9.

In the present exemplary embodiment, the "information set in advance" includes sensor identification information and a heating menu set in advance for temperature sensor 6 recognized by heating controller 8, for example. The sensor identification information indicates a temperature sensor and the heating menu corresponds to the temperature sensor.

### [3. Operation display unit]

Next, display by means of operation display unit 9 will be described.

FIG. 5 is a view illustrating one example of area identification information displayed on operation display unit 9 when the placement area detected by object-to-be-heated detector 7 is area E1.

Area identification information means information about a location and size of the placement area detected by object-to-be-heated detector 7, for example.

In FIG. 5, four small outlined rectangles correspond to locations of temperature sensors 6.

In the present exemplary embodiment, operation display unit 9 includes a touch panel display device. Specifically, operation display unit 9 is configured such that the operation unit operated by a user and the display unit displaying information regarding induction heating cooker 100 are integrally formed as a touch panel. Therefore, operation display unit 9 also has a function as the operation unit and a function as the display unit. However, the present disclosure is not limited thereto, and the operation unit and the display unit may be separately provided.

Placement condition display area 9A obtained by similarly scaling down the upper surface of top plate 2 is displayed on the whole or a part of operation display unit 9 as illustrated in FIG. 5.

When the placement area detected by object-to-be-heated detector 7 is area E1, heating controller 8 recognizes low temperature sensors 6A on mounting plate 5A as temperature sensors 6 located below area E1 (see FIG. 4).

While doing so, heating controller 8 also displays icon A1 having a rectangular shape on operation display unit 9 as one example of the area identification information.

Heating controller 8 also displays a heating menu, set in advance in correspondence with low temperature sensor 6A, on operation display unit 9 as the information set in advance for low temperature sensor 6A.

The "heating menu set in advance" means a heating menu for making it possible to heat object to be heated 3 as appropriate by means of temperature sensors 6, for example.

In a case where icon A1 is selected (pressed) to heat object to be heated 3 placed in area E1, heating controller 8 may display a heating menu set in advance in correspondence with temperature sensor 6 (6A) which is recognized.

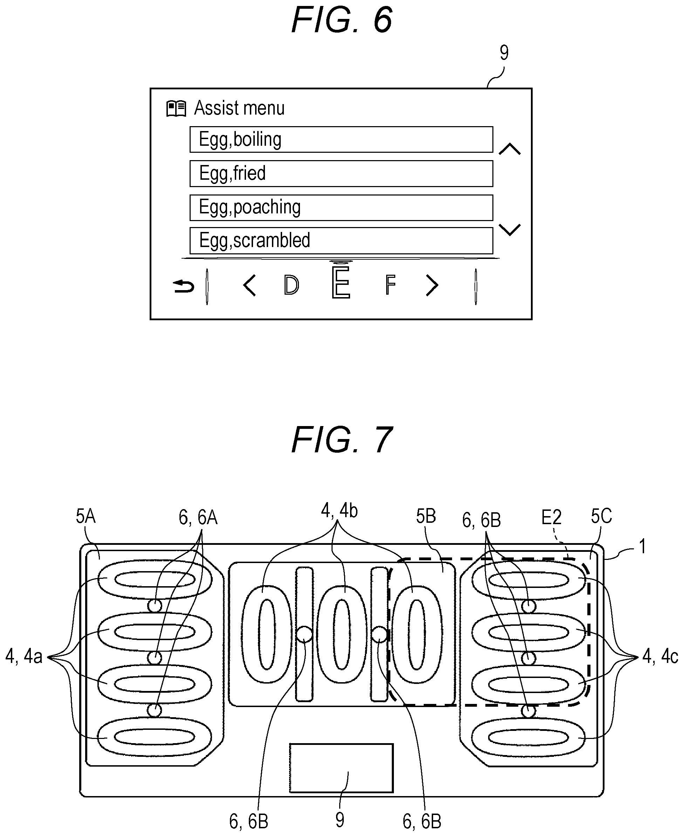

FIG. 6 is a view illustrating a state where an "Assist menu" is displayed on operation display unit 9 as an example of the heating menu set in advance in correspondence with low temperature sensor 6A.

The assist menu in the present exemplary embodiment indicates a menu for allowing appropriate cooking to be performed under control based on a temperature control program in the detectable temperature range of temperature sensor 6. The temperature control programs for the respective menus are incorporated into a memory of heating controller 8.

As illustrated in FIG. 6, operation display unit 9 displays, as the assist menu, "Egg, boiling", "Egg, fried", "Egg, poaching", and "Egg, scrambled", for example.

The user can achieve desired heating of object to be heated 3 by selecting any one of the assist menus displayed on operation display unit 9.

FIG. 7 is a view illustrating, in a broken line, a placement area when an object to be heated is placed at a rear right part of the top plate in FIG. 3.

In a case where the placement area where object to be heated 3 is placed is area E2 enclosed by a broken line in FIG. 7, for example, heating coils 4 corresponding to area E2 are three heating coils 4 (4c) on mounting plate 5C and one rightmost heating coil 4 (4b) on mounting plate 5B.

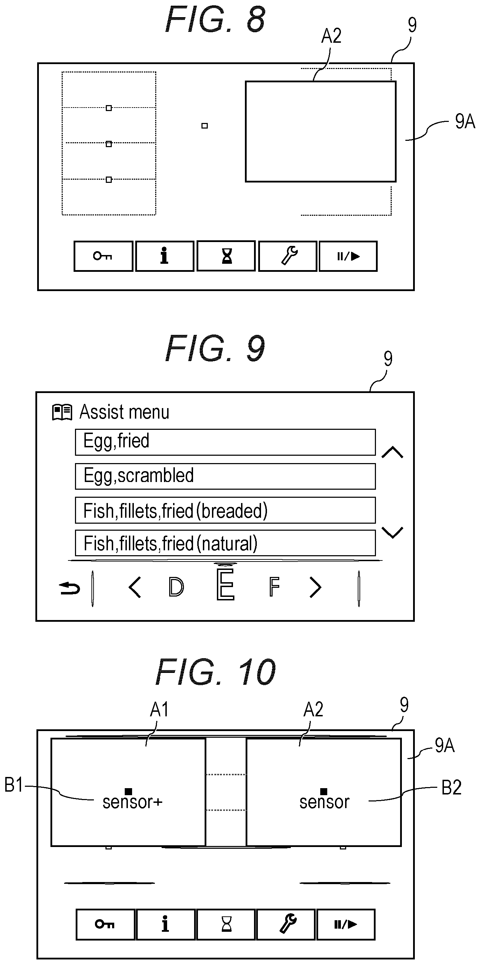

FIG. 8 is a view illustrating one example of area identification information displayed on operation display unit 9 when the placement area detected by object-to-be-heated detector 7 is area E2.

When the placement area detected by object-to-be-heated detector 7 is area E2, heating controller 8 recognizes high temperature sensors 6B on mounting plate 5C as temperature sensors 6 located below area E2 (see FIG. 7).

While doing so, heating controller 8 also displays icon A2 having a rectangular shape on operation display unit 9 as one example of the area identification information.

Heating controller 8 also displays a heating menu, set in advance in correspondence with high temperature sensor 6B, on operation display unit 9 as the information set in advance for high temperature sensor 6B.

In a case where icon A2 is selected (pressed) to heat object to be heated 3 placed in area E2, heating controller 8 may display a heating menu set in advance in correspondence with temperature sensor 6 (6B) which is recognized.

FIG. 9 is a view illustrating a state where an "Assist menu" is displayed on operation display unit 9 as an example of a heating menu set in advance in correspondence with high temperature sensor 6B.

As illustrated in FIG. 9, operation display unit 9 displays "Egg, fried", "Egg, scrambled", "Fish fillets, fried (breaded)", and "Fish fillets, fried (natural)" as assist menus, for example.

The assist menus do not include menus, such as "Egg, boiling" and "Egg, poaching", which are desired to have temperature control in a temperature range (for example, 70°C to 140°C) that cannot be detected by high temperature sensor 6B.

The user can perform the desired cooking while heating object to be heated 3 by selecting any one of the assist menus displayed on operation display unit 9.

Induction heating cooker 100 according to the present exemplary embodiment has a plurality of temperature sensors 6 having different detectable temperature ranges from one another. The induction heating cooker is configured such that heating controller 8 recognizes temperature sensor 6 located below object to be heated 3, and a heating menu to be displayed on operation display unit 9 is changed according to temperature sensor 6 which is recognized.

With this configuration, wherever object to be heated 3 is placed on top plate 2, heating controller 8 can recognize temperature sensor 6 located below object to be heated 3 and execute a heating menu corresponding to temperature sensor 6 which is recognized. Accordingly, usability can be further improved.

In the present exemplary embodiment, heating controller 8 displays a heating menu, set in advance in correspondence with low temperature sensor 6A, on operation display unit 9 as the information set in advance, as described with reference to FIGS. 4 to 6. However, the present disclosure is not limited thereto.

For example, heating controller 8 may be configured to display sensor identification information indicating temperature sensor 6 recognized by heating controller 8 on operation display unit 9, as the information set in advance, by adding the sensor identification information to the area identification information indicating a placement area.

FIG. 10 is a view illustrating a display example in which sensor identification information is added to icons A1 and A2 serving as the area identification information displayed on operation display unit 9, when placement areas detected by object-to-be-heated detector 7 are areas E1 and E2.

When the placement area detected by object-to-be-heated detector 7 is area E1, heating controller 8 recognizes low temperature sensors 6A on mounting plate 5A as temperature sensors 6 located below area E1 (see FIG. 4).

While doing so, heating controller 8 adds icon B1, serving as the sensor identification information indicating low temperature sensor 6A and including a black rectangle and characters of "sensor+", to icon A1, having a rectangular shape, serving as one example of the area identification information and displays the resultant on operation display unit 9 as illustrated in FIG. 10. In the display example illustrated in FIG. 10, sensor identification information B1 overlays area identification information A1.

When the placement area detected by object-to-be-heated detector 7 is area E2, heating controller 8 recognizes high temperature sensors 6B on mounting plate 5C as temperature sensors 6 located below area E2 (see FIG. 7).

While doing so, heating controller 8 adds icon B2, serving as the sensor identification information indicating high temperature sensor 6B and including a black rectangle and characters of "sensor", to icon A2 serving as one example of the area identification information and displays the resultant on operation display unit 9.

With this configuration, the user can easily visually ensure whether temperature sensor 6 located below the placement area where object to be heated 3 is placed is low temperature sensor 6A or high temperature sensor 6B. Thus, the user can place object to be heated 3 on an appropriate position for heating object to be heated 3 according to the desired heating menu. Accordingly, the usability of the induction heating cooker can be further improved.

When icon A1 is selected to heat object to be heated 3 placed in area E1, heating controller 8 may display a heating menu set in advance in correspondence with low temperature sensor 6A on operation display unit 9 (for example, see FIG. 6).

Similarly, when icon A2 is selected to heat object to be heated 3 placed in area E2, heating controller 8 may display a heating menu set in advance in correspondence with high temperature sensor 6B on operation display unit 9 (for example, see FIG. 9).

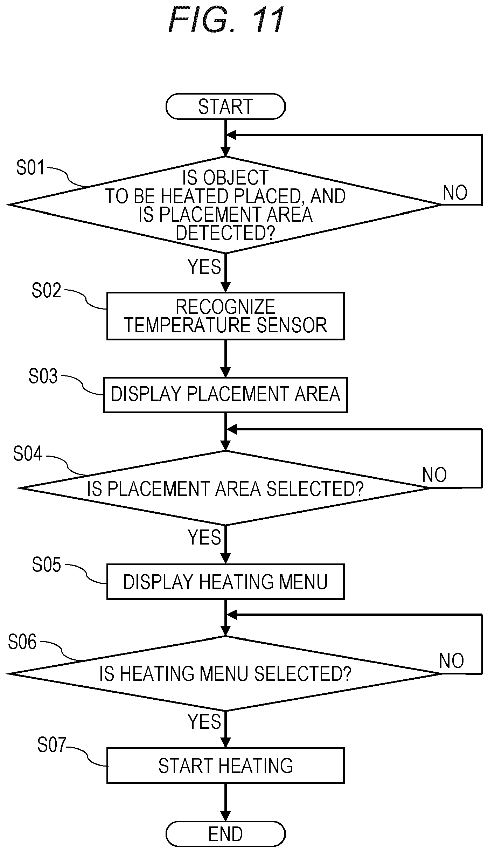

FIG. 11 is a flowchart illustrating an operation of the heating controller.

As illustrated in FIG. 11, when the user places object to be heated 3 on top plate 2 and object-to-be-heated detector 7 detects a placement area (Yes in step S01), heating controller 8 recognizes temperature sensor 6 located below the placement area (step S02). Heating controller 8 also displays the placement area on operation display unit 9 as an icon, for example (step S03). When the result in step S01 is No, heating controller 8 waits until object to be heated 3 is placed on top plate 2 and the placement area is detected by object-to-be-heated detector 7.

Next, when the user selects an icon indicating the placement area (Yes in step S04), heating controller 8 displays a heating menu corresponding to temperature sensor 6 which is recognized on operation display unit 9 (step S05). When the result in step S04 is No, heating controller 8 waits until the user selects an icon indicating the placement area.

Then, when the user selects a heating menu (Yes in step S06), heating controller 8 starts to heat object to be heated 3 (step S07). When the result in step S06 is No, heating controller 8 waits until the user selects a heating menu.

It is to be noted that heating controller 8 may display a heating menu on operation display unit 9 in step S05, regardless of whether the placement area is selected or not in step S04.

According to the present exemplary embodiment, object to be heated 3 can be placed at any position on top plate 2. Therefore, temperature sensors 6 located below the placement area detected by object-to-be-heated detector 7 may include both low temperature sensor 6A and high temperature sensor 6B.

In this case, heating controller 8 recognizes that both low temperature sensor 6A and high temperature sensor 6B are located below the placement area detected by object-to-be-heated detector 7. Therefore, in such a case, heating controller 8 may be configured to recognize high temperature sensor 6B or low temperature sensor 6A as the temperature sensor located below the placement area based on a ratio of a size of an area where a temperature is detectable by high temperature sensor 6B to a size of an area where a temperature is detectable by low temperature sensor 6A.

In addition, heating controller 8 may recognize high temperature sensor 6B or low temperature sensor 6A as the temperature sensor located below the placement area based on a size of an area where a temperature is detectable by low temperature sensor 6A, for example.

Then, heating controller 8 may display information set in advance for temperature sensor 6 which is recognized on operation display unit 9.

The present exemplary embodiment has described an example where the "area identification information" is displayed as icon A1 or icon A2 on operation display unit 9 as illustrated in FIGS. 5, 8, and 10. However, the present disclosure is not limited thereto. For example, the "area identification information" may be displayed as character information on operation display unit 9.

Although the present exemplary embodiment has described an example where the "sensor identification information" is displayed on operation display unit 9 as icon B1 or icon B2 including character information as illustrated in FIG. 10, the present disclosure is not limited thereto. For example, the "sensor identification information" may be displayed as an icon including only graphics on operation display unit 9.

In the present exemplary embodiment, heating controller 8 displays icon A2 on operation display unit 9 as one example of the area identification information. Thus, the user can easily visually check whether object-to-be-heated detector 7 appropriately detects the placement area where object to be heated 3 is placed.

In this case, object-to-be-heated detector 7 may not appropriately detect the placement area. To address such a problem, operation display unit 9 is preferably configured such that the area identification information is manually changeable through an operation performed on operation display unit 9. According to this configuration, the user can correct the placement area detected by object-to-be-heated detector 7 to an appropriate placement area. Accordingly, the usability can be further improved.

Although the present exemplary embodiment has described that the plurality of temperature sensors 6 include low temperature sensor 6A and high temperature sensor 6B which have different detectable temperature ranges from each other, the present disclosure is not limited thereto. For example, the plurality of temperature sensors 6 may include temperature sensors which have different detection speeds or detection regions from one another, instead of the detectable temperature ranges. That is, the plurality of temperature sensors 6 may be temperature sensors having different characteristics from one another.

For example, if temperature sensors having different detection speeds from one another are used, a heating menu indicating that a material easily sticks to an object to be heated may be displayed for a temperature sensor having a high detection speed, whereas a heating menu indicating that a material hardly sticks to an object to be heated may be displayed for a temperature sensor having a low detection speed. That is, heating controller 8 may be configured to display a heating menu according to a detection speed as the information set in advance.

Although the present disclosure has been fully described by way of preferred exemplary embodiments with reference to the accompanying drawings, it is to be noted herein that various changes and modifications will be apparent to those skilled in the art.

### INDUSTRIAL APPLICABILITY

The induction heating cooker according to the present disclosure can further improve usability, and thus, the present disclosure is particularly useful for a built-in or stationary induction heating cooker having a larger top plate.

### REFERENCE MARKS IN THE DRAWINGS

1: housing
2: top plate
2A: operation window
3: object to be heated
4, 4a, 4b, 4c: heating coil
5A, 5B, 5C: mounting plate
6: temperature sensor
6A: low temperature sensor
6B: high temperature sensor
7: object-to-be-heated detector
8: heating controller
9: operation display unit
9A: placement condition display area
100: induction heating cooker

## Claims

1. An induction heating cooker (100) comprising:
a top plate (2) on which an object to be heated (3) is placeable;
a plurality of heating coils (4) that are disposed below the top plate (2) and configured to inductively heat the object to be heated (3);
a plurality of temperature sensors (6) disposed below the top plate (2);
an object-to-be-heated detector (7) that detects a placement area of the top plate (2), on which the object to be heated (3) is placed;
a heating controller (8) that controls an operating state of at least one of the plurality of heating coils (4) corresponding to the placement area detected by the object-to-be-heated detector (7) based on a temperature detected by at least one of the plurality of temperature sensors (6);
an operation unit (9) operated by a user; and
a display unit (9),
**characterized in that**:
the plurality of temperature sensors (6) have different characteristics from one another; and
the heating controller (8) is configured to recognize a temperature sensor located below the placement area detected by the object-to-be-heated detector (7) from among the plurality of temperature sensors (6), and display information set in advance for the temperature sensor recognized by the heating controller (8) on the display unit (9).

2. The induction heating cooker (100) according to claim 1,
wherein the heating controller (8) is configured to display sensor identification information indicating the temperature sensor recognized by the heating controller (8) on the display unit (9) as the information set in advance.

3. The induction heating cooker (100) according to claim 1 or 2,
wherein the heating controller (8) is configured to display a heating menu corresponding to the temperature sensor recognized by the heating controller (8) on the display unit (9) as the information set in advance.

4. The induction heating cooker (100) according to any one of claims 1 to 3,
wherein the heating controller (8) is configured to display area identification information indicating the placement area on the display unit (9).

5. The induction heating cooker (100) according to claim 4,
wherein the operation unit (9) is configured such that the area identification information is manually changeable.

6. The induction heating cooker (100) according to claim 4 or 5,
wherein the heating controller (8) is configured to display the information set in advance on the display unit (9), when the placement area indicated by the area identification information is selected.

7. The induction heating cooker (100) according to any one of claims 1 to 6,
wherein a temperature range detectable by at least one of the plurality of temperature sensors (6) is different from temperature ranges detectable by other temperature sensors from among the plurality of temperature sensors (6).

8. The induction heating cooker (100) according to claim 7,
wherein a lower limit value of a temperature range detectable by at least one of the plurality of temperature sensors (6) is different from lower limit values of temperature ranges detectable by other temperature sensors from among the plurality of temperature sensors (6).

9. The induction heating cooker (100) according to claim 8,
wherein, when recognizing that a first temperature sensor (6B) and a second temperature sensor (6A) which are among the plurality of temperature sensors (6) and have different lower limit values of detectable temperature ranges from each other are located below the placement area detected by the object-to-be-heated detector (7), the heating controller (8) selects one of the first temperature sensor (6B) and the second temperature sensor (6A) based on a ratio of a size of an area where a temperature is detectable by the second temperature sensor (6A) to a size of an area where a temperature is detectable by the first temperature sensor (6B), and displays information on the display unit (9), the information having been set in advance for the one of the first temperature sensor (6B) and the second temperature sensor (6A) that is selected by the heating controller (8).

10. The induction heating cooker (100) according to any one of claims 1 to 9,
wherein the display unit (9) displays the information set in advance as an icon.

11. The induction heating cooker (100) according to any one of claims 1 to 10,
wherein the operation unit (9) and the display unit (9) are integrally formed as a touch panel.

## Patentansprüche

1. Induktionsheizungsherd (100), umfassend:
eine obere Platte (2), auf der ein zu erwärmendes Objekt (3) platzierbar ist;
eine Vielzahl von Heizspulen (4), die unter der oberen Platte (2) angeordnet sind und konfiguriert sind, das zu erwärmende Objekt (3) induktiv zu erwärmen;
eine Vielzahl von Temperatursensoren (6), die unter der oberen Platte (2) angeordnet sind;
einen Detektor für das zu erwärmende Objekt (7), der einen Platzierungsbereich der oberen Platte (2), auf dem das zu erwärmende Objekt (3) platziert ist, detektiert;
eine Heizsteuerung (8), die einen Betriebszustand von mindestens einer der Vielzahl von Heizspulen (4), die dem Platzierungsbereich entspricht, der durch den Detektor für das zu erwärmende Objekt (7) detektiert wird, basierend auf einer Temperatur, die durch mindestens einen der Vielzahl von Temperatursensoren (6) detektiert wird, steuert;
eine Betriebseinheit (9), die durch einen Benutzer betrieben wird; und
eine Anzeigeeinheit (9),
**dadurch gekennzeichnet, dass**:
die Vielzahl von Temperatursensoren (6) voneinander verschiedene Charakteristiken haben; und
die Heizsteuerung (8) konfiguriert ist, einen Temperatursensor, der sich unter dem Platzierungsbereich befindet, der durch den Detektor für das zu erwärmende Objekt (7) detektiert wird, unter der Vielzahl von Temperatursensoren (6) zu erkennen und Informationen, die im Voraus für den Temperatursensor eingestellt wurden, der durch die Heizsteuerung (8) erkannt wird, auf der Anzeigeeinheit (9) anzuzeigen.

2. Induktionsheizungsherd (100) nach Anspruch 1,
wobei die Heizsteuerung (8) konfiguriert ist, Sensoridentifikationsinformationen, die den Temperatursensor angeben, der durch die Heizsteuerung (8) erkannt wird, auf der Anzeigeeinheit (9) als die im Voraus eingestellten Informationen anzuzeigen.

3. Induktionsheizungsherd (100) nach Anspruch 1 oder 2,
wobei die Heizsteuerung (8) konfiguriert ist, ein Heizmenü, das dem Temperatursensor entspricht, der durch die Heizsteuerung (8) erkannt wird, auf der Anzeigeeinheit (9) als die im Voraus eingestellten Informationen anzuzeigen.

4. Induktionsheizungsherd (100) nach einem der Ansprüche 1 bis 3,
wobei die Heizsteuerung (8) konfiguriert ist, Bereichsidentifikationsinformationen, die den Platzierungsbereich angeben, auf der Anzeigeeinheit (9) anzuzeigen.

5. Induktionsheizungsherd (100) nach Anspruch 4,
wobei die Betriebseinheit (9) derart konfiguriert ist, dass die Bereichsidentifikationsinformationen manuell veränderbar sind.

6. Induktionsheizungsherd (100) nach Anspruch 4 oder 5,
wobei die Heizsteuerung (8) konfiguriert ist, die im Voraus eingestellten Informationen auf der Anzeigeeinheit (9) anzuzeigen, wenn der Platzierungsbereich, der durch die Bereichsidentifikationsinformationen angegeben ist, ausgewählt ist.

7. Induktionsheizungsherd (100) nach einem der Ansprüche 1 bis 6,
wobei sich ein Temperaturbereich, der durch mindestens einen der Vielzahl von Temperatursensoren (6) detektierbar ist, von Temperaturbereichen, die durch andere Temperatursensoren unter der Vielzahl von Temperatursensoren (6) detektierbar sind, unterscheidet.

8. Induktionsheizungsherd (100) nach Anspruch 7,
wobei sich ein unterer Grenzwert eines Temperaturbereichs, der durch mindestens einen der Vielzahl von Temperatursensoren (6) detektierbar ist, von unteren Grenzwerten von Temperaturbereichen, die durch andere Temperatursensoren unter der Vielzahl von Temperatursensoren (6) detektierbar sind, unterscheidet.

9. Induktionsheizungsherd (100) nach Anspruch 8,
wobei, wenn erkannt wird, dass sich ein erster Temperatursensor (6B) und ein zweiter Temperatursensor (6A), die zu der Vielzahl von Temperatursensoren (6) gehören und voneinander verschiedene untere Grenzwerte von detektierbaren Temperaturbereichen haben, unter dem Platzierungsbereich, der durch den Detektor für das zu erwärmende Objekt (7) detektiert wird, befinden, die Heizsteuerung (8) einen des ersten Temperatursensors (6B) und des zweiten Temperatursensors (6A) basierend auf einem Verhältnis einer Größe eines Bereichs, in dem eine Temperatur durch den zweiten Temperatursensor (6A) detektierbar ist, zu einer Größe eines Bereichs, in dem eine Temperatur durch den ersten Temperatursensor (6B) detektierbar ist, auswählt und Informationen auf der Anzeigeeinheit (9) anzeigt, wobei die Informationen im Voraus für den einen des ersten Temperatursensors (6B) und des zweiten Temperatursensors (6A), der durch die Heizsteuerung (8) ausgewählt ist, eingestellt wurden.

10. Induktionsheizungsherd (100) nach einem der Ansprüche 1 bis 9,
wobei die Anzeigeeinheit (9) die im Voraus eingestellten Informationen als ein Symbol anzeigt.

11. Induktionsheizungsherd (100) nach einem der Ansprüche 1 bis 10,
wobei die Betriebseinheit (9) und die Anzeigeeinheit (9) ganzheitlich als eine Berührungstafel gebildet sind.

## Revendications

1. Appareil de cuisson à chauffage par induction (100), comprenant :
une plaque supérieure (2) sur laquelle un objet destiné à être chauffé (3) peut être placé ;
une pluralité de bobines chauffantes (4) qui sont disposées sous la plaque supérieure (2) et configurées pour chauffer par induction l'objet destiné à être chauffé (3) ;
une pluralité de capteurs de température (6) disposés en dessous de la plaque supérieure (2) ;
un détecteur d'objet destiné à être chauffé (7) qui détecte une zone de placement de la plaque supérieure (2), sur laquelle l'objet destiné à être chauffé (3) est placé ;
un dispositif de commande de chauffage (8) qui commande un état de fonctionnement d'au moins une de la pluralité de bobines chauffantes (4) correspondant à la zone de placement détectée par le détecteur d'objet destiné à être chauffé (7) sur la base d'une température détectée par au moins un de la pluralité de capteurs de température (6) ;
une unité de commande (9) utilisée par un utilisateur ; et
une unité d'affichage (9),
**caractérisé en ce que** :
la pluralité de capteurs de température (6) ont des caractéristiques différentes les uns par rapport aux autres ; et
le dispositif de commande de chauffage (8) est configuré pour reconnaître un capteur de température situé en dessous de la zone de placement détectée par le détecteur d'objet destiné à être chauffé (7) parmi la pluralité de capteurs de température (6), et afficher des informations réglées d'avance pour le capteur de température reconnu par le dispositif de commande de chauffage (8) sur l'unité d'affichage (9).

2. Appareil de cuisson à chauffage par induction (100) selon la revendication 1, dans lequel
dans lequel le dispositif de commande de chauffage (8) est configuré pour afficher des informations d'identification de capteur indiquant le capteur de température reconnu par le dispositif de commande de chauffage (8) sur l'unité d'affichage (9) en tant qu'informations réglées d'avance.

3. Appareil de cuisson à chauffage par induction (100) selon la revendication 1 ou 2, dans lequel
dans lequel le dispositif de commande de chauffage (8) est configuré pour afficher un menu de chauffage correspondant au capteur de température reconnu par le dispositif de commande de chauffage (8) sur l'unité d'affichage (9) en tant qu'informations réglées d'avance.

4. Appareil de cuisson à chauffage par induction (100) selon l'une quelconque des revendications 1 à 3, dans lequel
dans lequel le dispositif de commande de chauffage (8) est configuré pour afficher des informations d'identification de zone indiquant la zone de placement sur l'unité d'affichage (9).

5. Appareil de cuisson à chauffage par induction (100) selon la revendication 4, dans lequel
dans lequel l'unité de commande (9) est configurée de telle sorte que les informations d'identification de zone puissent être manuellement changées.

6. Appareil de cuisson à chauffage par induction (100) selon la revendication 4 ou 5,
dans lequel le dispositif de commande de chauffage (8) est configuré pour afficher les informations réglées d'avance sur l'unité d'affichage (9), lorsque la zone de placement indiquée par les informations d'identification de zone est sélectionnée.

7. Appareil de cuisson à chauffage par induction (100) selon l'une quelconque des revendications 1 à 6,
dans lequel une plage de température détectable par au moins un de la pluralité de capteurs de température (6) est différente de plages de température détectables par d'autres capteurs de température parmi la pluralité de capteurs de température (6).

8. Appareil de cuisson à chauffage par induction (100) selon la revendication 7,
dans lequel une valeur limite inférieure d'une plage de température détectable par au moins un de la pluralité de capteurs de température (6) est différente de valeurs limites inférieures de plages de température détectables par d'autres capteurs de température parmi la pluralité de capteurs de température (6).

9. Appareil de cuisson à chauffage par induction (100) selon la revendication 8,
dans lequel, lors de la reconnaissance qu'un premier capteur de température (6B) et un second capteur de température (6A), qui sont parmi la pluralité de capteurs de température (6) et ont différentes valeurs limites inférieures de plages de température détectables l'un par rapport à l'autre, sont situés en dessous de la zone de placement détectée par le détecteur d'objet destiné à être chauffé (7), le dispositif de commande de chauffage (8) sélectionne un du premier capteur de température (6B) et du second capteur de température (6A) sur la base d'un rapport d'une taille d'une zone où une température est détectable par le second capteur de température (6A) par rapport à une taille d'une zone où une température est détectable par le premier capteur de température (6B), et affiche des informations sur l'unité d'affichage (9), les informations ayant été réglées d'avance pour l'un du premier capteur de température (6B) et du second capteur de température (6A) qui est sélectionné par le dispositif de commande de chauffage (8).

10. Appareil de cuisson à chauffage par induction (100) selon l'une quelconque des revendications 1 à 9,
dans lequel l'unité d'affichage (9) affiche les informations réglées d'avance sous forme d'icône.

11. Appareil de cuisson à chauffage par induction (100) selon l'une quelconque des revendications 1 à 10,
dans lequel l'unité de commande (9) et l'unité d'affichage (9) sont de façon monobloc sous forme d'écran tactile.
